# EUROPÄISCHE PATENTSCHRIFT

(11) **EP 0 391 989 B1**
(45) Veröffentlichungstag und Bekanntmachung des Hinweises auf die Patenterteilung: **19.05.1993**
(21) Anmeldenummer: 89908817.3
(22) Anmeldetag: 01.08.1989
(51) Int. Cl.: B60C 23/00, B60C 23/20

(54) **SCHALTUNGSANORDNUNG ZUR REIFENDRUCK- UND TEMPERATUR-ÜBERWACHUNG**
CIRCUIT FOR MONITORING TIRE INFLATION PRESSURE AND TEMPERATURE
CIRCUIT DE CONTROLE DE LA TEMPERATURE ET DE LA PRESSION DES PNEUS

(30) Priorität: 15.10.1988 DE 3835236
(43) Veröffentlichungstag der Anmeldung: 17.10.1990
(73) Patentinhaber: ROBERT BOSCH GMBH, 70442 Stuttgart (DE)
(72) Erfinder: HETTICH, Gerhard, D-8501 Dietenhofen (DE); DÖRFLER, Reiner, D-8500 Nürnberg 1 (DE)
(86) Internationale Anmeldenummer: DE8900501
(87) Internationale Veröffentlichungsnummer: WO9003895

(56) Entgegenhaltungen:
- WO-A-85/03675
- WO-A-87/04123
- DE-A- 3 446 248
- Ingénieurs de l'Automobile, Nr. 8 November 1984 (Paris, FR), G. Beghin et al.: "Mesure de pression et surveillance de pneumatiques", S. 86-91

## Beschreibung

Die Erfindung geht aus von einer Schaltungsanordnung zur Überwachung der Luftmasse in einem Fahrzeugreifen nach dem Oberbegriff des Patentanspruchs 1. Bei einer bekannten Schaltungsanordnung dieser Art nach der WO 87/041 23 werden zur Überwachung der Luftmasse im Reifen eines Kraftfahrzeuges Temperatur und Druck der Luft im Reifen von Halbleitersensoren abgefühlt und über eine Multiplexsteuerung entsprechende Meßwerte zyklisch vom umlaufenden Rad über einen Wandler auf eine fahrzeugfeste Auswerteschaltung übertragen. Aus dem Verhältnis von Reifendruck und Reifenlufttemperatur (PT) wird dort die im Reifen eingefüllte Luftmasse ermittelt und mit einem zulässigen Grenzwert verglichen. Sobald die Luftmasse in einem der Fahrzeugreifen den vorgegebenen Grenzwert erreicht oder unterschreitet, wird ein optisches bzw. akustisches Signal abgegeben und damit der Fahrer des Fahrzeugs auf die Gefahr der Überbeanspruchung des Reifens aufmerksam gemacht.

Zur Überwachung der Luftmasse im Fahrzeugreifen ist es erforderlich, daß man den Druck und die Temperatur der Luft im Reifen möglichst genau kennt. Da aber während der Fahrt die Luft im Reifen und die Radfelge unterschiedliche Temperaturen haben können, der Temperatursensor jedoch in der Radfelge eingesetzt ist und daher thermisch nur unvollständig von der Radfelge abgekoppelt werden kann, läßt sich die Lufttemperatur im Reifen nicht mit der erforderlichen Genauigkeit messen. Es bleibt immer eine Temperaturdifferenz zwischen der Reifenluft und dem Meßwert des Temperatursensors.

Mit der vorliegenden Erfindung wird angestrebt, bei der Ermittlung der Reifenlufttemperatur bzw. der Luftmasse im Reifen den Temperatur-Meßfehler zu kompensieren.

### Vorteile der Erfindung

Die erfindungsgemäße Schaltungsanordnung mit den kennzeichnenden Merkmalen des Patentanspruchs 1 hat den Vorteil, daß der Meßfehler des Temperatursensors im Fahrzeugrad nicht mehr durch aufwendige Maßnahmen zur thermischen Abkopplung von der Radfelge möglichst gering gehalten werden muß, sondern daß die den Meßwertfehler hervorrufenden Parameter nunmehr in einer Korrekturschaltung erfaßt werden, um abhängig davon den Temperaturmeßwert oder die aus ihm zusammen mit dem Luftdruck errechnete Luftmasse im Reifen auf den tatsächlichen Wert möglichst genau zu korrigieren. Als weiterer Vorteil ist anzusehen, daß die dazu benötigten Korrekturparameter in vielen Fällen bereits im Fahrzeug vorhanden sind bzw. einmal für bestimmte Fahrzeugtypen und/oder Fahrzeugräder zu ermitteln sind, so daß die Parameter ohne erhebliche Mehraufwand in die Korrekturschaltung eingegeben werden können. Außerdem können aufwendige Konstruktionen zur thermischen Abkopplung des Temperatursensors von der Felgentemperatur vermieden werden, da die Reifenlufttemperatur während der Fahrt mit Hilfe der Korrekturparameter mit guter Genauigkeit bestimmt werden kann, wodurch die Zuverlässigkeit des Überwachungssystems beträchtlich erhöht wird.

Durch die in den Unteransprüchen aufgeführten Maßnahmen ergeben sich vorteilhafte Weiterbildungen und Verbesserungen der im Hauptanspruch angegebenen Merkmale. So ist es besonders vorteilhaft, die Korrekturschaltung in die fahrzeugfeste, zentral angeordnete Auswerteschaltung mit zu integrieren und der Korrekturschaltung sowohl veränderliche Parameter als auch feste Parameter zuzuführen. Als veränderliche Korrekturparameter sind dabei der Reifendruck sowie ein Signal über dem Fahrbahnzustand naß, trocken und ein Fahr- bzw. Geschwindigkeitssignal vorgesehen. Das Signal für einen nassen bzw, trockenen Reifen wird vorzugsweise von einem Feuchtesensor an die Korrekturschaltung gegeben, der im Bereich des Rades am Fahrzeug befestigt ist und bei nasser Fahrbahn vom Reifen bespritzt wird. In einfachster Weise kann jedoch dieses Signal auch von der Scheibenwischanlage des Fahrzeugs abgegriffen werden. Das Fahrsignal kann vom Tacho abgegriffen werden. Als feste Korrekturparameter sind Korrekturwerte und Zeitkonstanten zur Temperaturnachführung bei Meßwertänderungen vorzusehen, die abhängig von der Fahrzeugtype bzw. von den serienmäßig montierten Rädern oder der Bereifung einmal ermittelt werden und dann als Festwerte in einen Datenspeicher der Korrekturschaltung einzugeben sind. Mit den ständig auf die Auswerteschaltung übertragenen Reifendruck-Meßwerten wird schließlich die zu überwachende Luftmasse in den Reifen errechnet. Außerdem kann bei extrem geringem Luftdruck, z.B. bei fehlerhafter Temperaturmessung ein Warnsignal ausgelöst werden.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild der erfindungsgemäßen Schaltungsanordnung zur Überwachung der Luftmasse von Fahrzeugreifen, Figur 2 ein Diagramm mit dem Meßwertfehler in Abhängigkeit von der Fahrzeuggeschwindigkeit und Figur 3 ein Blockschaltbild der Korrekturschaltung für mehrere Räder eines Fahrzeugs.

### Beschreibung des Ausführungsbeispieles

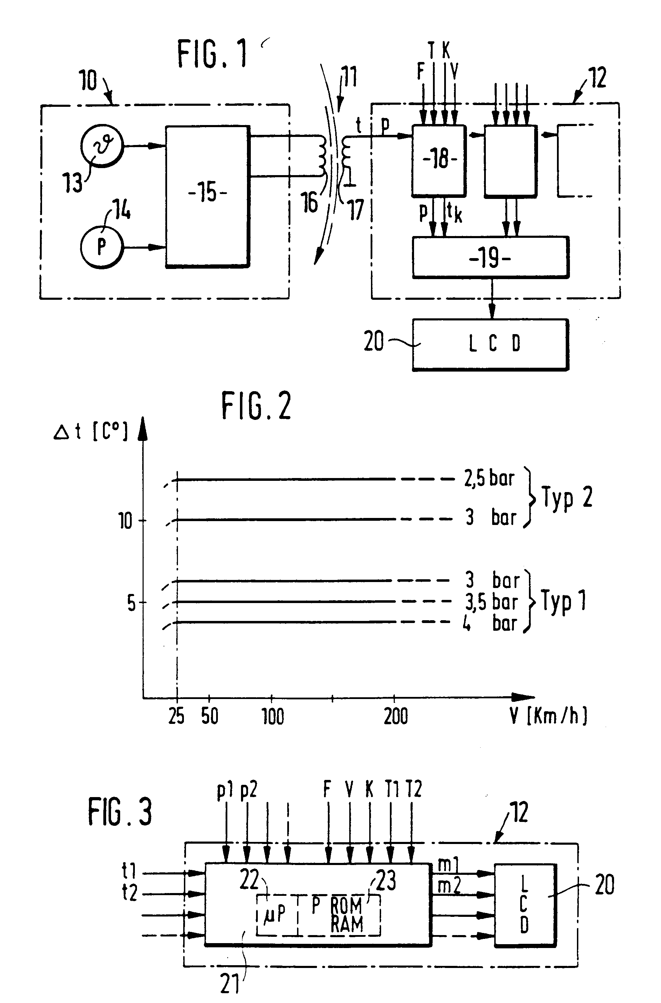

In Figur 1 ist die erfindungsmäße Schaltungsanordnung zur Überwachung der Luftmasse in einem Fahrzeugreifen durch Messen des Luftdrucks und der Temperatur an einem Rad eines Kraftfahrzeuges im Blockschaltbild dargestellt. Sie besteht aus einem, mit dem Rad umlaufenden Schaltungsteil 10, einem Übertrager 11 und einer fahrzeugfesten Auswerteschaltung 12. Der umlaufende, vorzugsweise an einer Radfelge befestigte Schaltungsteil 10 enthält einen Temperatursensor 13 und einen Drucksensor 14 in Form von Halbleitersensoren, deren Signale einer Elektronik 15 zur Signalaufbereitung zugeführt werden, deren Aufbau und Funktion in der WO 87/04123 näher erläutert ist. Der Ausgang der Elektronik 15 ist mit einer ringförmigen mit dem Fahrzeugrad umlaufenden Übertragerspule 16 verbunden, die eine von der Radposition unabhängige Übertragung von Daten zu einer in Radnähe fahrzeugfest angeordneten Aufnahmespule 17 des Übertragers 11 ermöglicht. Die Aufnahmespule 17 liegt mit einem Ende auf Masse und mit dem anderen Ende ist sie mit einem Eingang einer Korrekturschaltung 18 in der fahrzeugfesten Auswerteschaltung 12 verbunden. Über diesen Eingang werden in zeitlicher Folge zyklisch die vom Temperatursensor 13 und vom Drucksensor 14 gemessenen und in der Elektronik 15 aufbereiteten Temperatur- und Druck-Meßwerte t, p gegeben. Weitere Eingänge der Korrekturschaltung 18 werden mit mehreren Korrektur-Parametern belegt, die zur Korrektur des vom Temperatursensor 13 gemessenen Temperaturwertes t dienen. Ein erster, veränderlicher Korrektur-Parameter ist die Feuchtigkeit des Reifens. Zu diesem Zweck ist in Radnähe ein kapazitiver Feuchtesensor am Fahzeug befestigt, der bei nasser Fahrbahn vom Reifen bespritzt wird. Das Signal dieses Feuchtesensors wird über einen Schwellwertschalter als O/I-Signal dem Eingang F der Korrekturschaltung 18 zugeführt. Dem Eingang T wird eine Zeitkonstante zugeführt, mit der die Temperaturkorrektur bei Temperaturänderungen bzw. Temperatursprüngen nachgeführt wird. Diese Zeitkonstante T ist ein mit der serienmäßig verwendeten Paarung von Radfelge und Reifen empirisch ermittelter Wert. Dieser Wert kann gegebenenfalls mit dem Feuchtesignal F zu einer zweiten Zeitkonstante verknüpft werden, die für Temperaturänderungen bei nassen Reifen gilt. Auf einen weiteren Eingang K werden ebenfalls für die Felgen-Reifen-Paarung ermittelte Korrekturwerte eingegeben, die die Temperaturdifferenzen zwischen Reifenluft- und Sensortemperatur bei nassem bzw. trockenem Rad bei verschiedenen Reifendruckwerten erfassen. Ein weiterer Korrektur-Parameter bildet die Fahrzeuggeschwindigkeit, mit der festgestellt wird, ob das Fahrzeug steht bzw. langsam rollt oder ob es fährt. Ein entsprechendes O/I-Signal wird auf den Eingang v der Korrekturschaltung 18 gegeben. Am Ausgang der Korrekturschaltung 18 wird ein korrigierter Temperaturwert tₖ abgegeben, wobei die Korrektur sowohl vom Luftdruck p im Reifen als Korrektur-Parameter sowie von der Straßenfeuchtigkeit F, der radspezifischen Zeitkonstante T und der Fahrzeuggeschwindigkeit bestimmt wird. Eine entsprechende Korrekturschaltung ist für jedes der zu überwachenden Fahrzeugräder in dem fahrzeugfesten Schaltungsteil 12 vorgesehen. In einem Rechner 19 der Auswerteschaltung 12 werden jeweils die Druckwerte durch die zugehörigen korrigierten Temperaturwerte tₖ dividiert, um so die zu überwachende Luftmasse im Reifen festzustellen.

Der für jedes Rad zyklisch ermittelte Wert wird mit einem zuvor eingegebenen Grenzwert verglichen. Wird der Grenzwert in einem der überwachten Reifen erreicht oder unterschritten, so erfolgt über ein Display 20 eine Warnanzeige. Gegebenenfalls kann in bekannter Weise über diese LCD 20 auch der augenblickliche Reifendruck bzw. die Temperatur eines jeden Reifens angezeigt werden.

In Figur 2 ist in einem Diagramm eine Kurvenschar dargestellt, mit der die Temperaturdifferenz Δt zwischen dem Meßwert des Temperatursensors 13 und der tatsächlichen Temperatur der Luft im Reifen bei verschiedenen Reifendrücken abhängig von der Fahrgeschwindigkeit v dargestellt ist. Aus diesem Diagramm ist erkennbar, daß die Temperaturdifferenz Δt mit abnehmendem Reifendruck gröber wird und daß sie darüber hinaus auch vom Fahrzeugtyp bzw. von der dort verwendeten Felgen-Reifen-Kombination der Fahrzeugräder abhängt. Ferner ist dem Diagramm zu entnehmen, daß die Temperaturdifferenz Δt von einer bestimmten Fahrgeschwindigkeit ab aufwärts praktisch konstant bleibt, d. h. unabhängig von der Fahrgeschwindigkeit ist. Die in Figur 2 dargestellte Kurvenschar wurde aufgrund von Versuchsfahrten mit zwei verschiedenen Fahrzeugen, dem Typ 1 und dem Typ 2 ermittelt. Dabei wurde ferner ermittelt, daß die Temperaturdifferenz Δt von einer Geschwindigkeit von 25 km/h an aufwärts unverändert bleibt. Für kleinere Geschwindigkeiten bis herunter zum Fahrzeugstillstand wird dagegen die Temperaturdifferenz noch zusätzlich. durch thermische Zeitkonstanten zwischen der Luft im Reifen und dem Sensor überlagert.

Die Kurvenschar nach Figur 2 wurde bei trockener Fahrbahn aufgenommen und gibt die Temperaturdifferenz Δt an, um die die tatsächliche Temperatur der Luft im Reifen gröber ist als die vom Temperatursensor 13 gemessene Temperatur. Eine entsprechende Kurvenschar ergibt sich bei nasser Fahrbahn, wobei die Temperaturdifferenz Δt jedoch geringer ist. Die Temperaturdifferenzen werden als fahrzeugtypische feste Korrekturparameter auf den Eingang K der Korrekturschaltung 18 eingegeben.

In Figur 3 ist eine weitere Ausgestaltung der Korrekturschaltung aus Figur 1 dargestellt, wobei alle zu überwachenden Räder des Fahrzeugs an eine gemeinsame Korrekturschaltung 21 angeschlossen sind. Diese Korrekturschaltung 21 enthält einen Rechner 22 und einen Datenspeicher 23. Der Korrekturschaltung 21 werden über mehrere auf der linken Seite dargestellte Eingänge die von den Temperatursensoren 13 der zu überwachenden Fahrzeugräder gemessenen Temperaturwerte t1, t2, ... zugeführt. Außerdem werden ihr als veränderliche Parameter die den einzelnen Temperaturwerten zugeordneten Reifendrücke p1, p2 ... zugeführt. Über einen weiteren Eingang wird als veränderlicher Parameter ein Feuchtesignal F zugeführt, in dem beispielsweise dieses Signal von den Schaltstellungen der Scheibenwischanlage für Dauerbetrieb abgegriffen wird. Über einen weiteren Eingang wird als veränderlicher Parameter ein Geschwindigkeitssignal v der Korrekturschaltung 21 zugeführt welches beispielsweise von einem Schalter abgegriffen wird, der beim Überschreiten einer vorgegebenen Geschwindigkeit von beispielsweise 50 km/h geschlossen wird. Über einen weiteren Eingang der Korrekturschaltung wird als fester Parameter je eine vom Fahrzeugtyp bzw. Radtyp abhängige Korrekturtabelle K bei feuchtem bzw. trockenem Rad in den Datenspeicher 23 der Korrekturschaltung 21 abgelegt, die der Kurvenschar für den Typ 1 bzw. Typ 2 aus Figur 2 entspricht. Ebenso ist es möglich, bereits bei der Herstellung und Programmierung der Korrekturschaltung 21 Korrekturtabellen für verschiedene Fahrzeug- bzw. Radtypen darin abzuspeichern und dann über den Eingang K der Korrekturschaltung 21 bei Inbetriebnahme der Reifendrucküberwachungsschaltung nur noch den jeweiligen Fahrzeug- bzw. Radtyp einzugeben. Über die Eingänge T1 und T2 der Korrekturschaltung 21 werden schließlich als weitere feste Parameter thermische Zeitkonstanten für Geschwindigkeiten oberhalb und unterhalb des Grenzwertes bzw. für trockene und nasse Fahrbahnen eingegeben, die ebenfalls fahrzeug- bzw. radspezifisch ermittelt werden. Auch diese Zeitkonstanten können für verschiedene Typen bereits im Speicher 23 der Korrekturschaltung 21 abgelegt sein, so daß aus diesen Werten mit Eingabe des Fahrzeug- bzw. Radtyps die entsprechenden Zeitkonstanten aufgerufen werden. Mit dem programmgesteuerten Rechner 22 dieser Korrekturschaltung 21 wird nun für jedes zu überwachende Fahrzeugrad in zyklischer Folge aus den gemessenen Temperaturwerten t1, t2 ... und den veränderlichen Parametern p1, p2 ... F, v und den festen Parametern K, T1, T2 die Luftmasse m1, m2, ... in dem zu überwachenden Reifen berechnet nach der Gleichung m = p/(t + Δt). Die Temperaturkorrektur Δt ist dabei abhängig vom Luftdruck p im Reifen, vom Reifenzustand "naß" oder "trocken", von der Fahrgeschwindigkeit und von dem Fahrzeug- bzw. Radtyp. Je nach Programmierung des Rechners 22 kann aus den verschiedenen Parametern ein Gesamtparameter gebildet und damit aus einer Korrekturtabelle die Temperaturkorrektur Δt entnommen werden oder für die verschiedenen Parameter werden aus dem Datenspeicher verschiedene Korrekturwerte entnommen und zu der Temperaturkorrektur Δt summiert.

Im einfachsten Fall wird ein durch vorherige Versuchsfahrten eines Fahrzeugs- bzw. Radtyps ermittelter Temperarturdifferenzwert Δt als fester Korrektur-Parameter bei fahrendem Fahrzeug d.h. vom veränderlichem Parameter Fahrt/Stillstand abhängig zum jeweils gemessenen Temperaturwert t1 t2 ... addiert.

## Patentansprüche

1. Schaltungsanordnung zur Überwachung der Luftmasse in einem Fahrzeugreifen mit einem am Rad befestigten, umlaufenden Sensor (13,14) für den Luftdruck und die Temperatur im Reifen, mit einem elektromagnetischen Übertrager (11) für die vom Sensor abgegebenen Meßwerte auf eine fahrzeugfeste Auswerteschaltung(12) zur Auslösung eines Alarmsignales bei zu geringer Luftmasse in einem der zu überwachenden Reifen, dadurch gekennzeichnet, daß der vom umlaufenden Sensor (13, 14) eines jeden zu überwachenden Fahrzeugrades gemessene Temperatur- und Luftdruck-Meßwert des Reifens einer Korrekturschaltung (18, 21) zugeführt ist, die mit mindestens einem Korrektur-Parameter aus Luftdruck (p) im Reifen, Straßenfeuchtigkeit (F), Fahrgeschwindigkeit (v), Felgen-Reifen-Paarungskorrekturwert (K) und/oder radspezifischer Zeitkonstante (T) für Temperaturänderungen beaufschlagt ist und deren Ausgang einen von dem mindestens einen Korrektur-Parameter abhängig korrigierten Meßwert für die Temperatur (tₖ) bzw. für die Luftmasse (m) im Reifen abgibt.

2. Schaltungsanordnung nach Anspruch 1, dadurch gekennzeichnet, daß der Korrekturschaltung (18, 21) veränderliche Korrektur-Parameter (p, F, v) und feste Korrektur-Parameter (K, T) zugeführt sind, wobei die festen Parameter in einem Datenspeicher (23) der Korrekturschaltung (18, 21) eingegeben sind.

3. Schaltungsanordnung nach Anspruch 2, dadurch gekennzeichnet, daß der Korrekturschaltung (18, 21) als veränderliche Parameter zur Korrektur der vom Sensor gemessenen Temperatur (t) der Reifendruck (p) sowie ein Naß-/Trocken-Signal (F) und ein geschwindigkeitsabhängiges Fahrsignal (v) zugeführt ist.

4. Schaltungsanordnung nach Anspruch 3, dadurch gekennzeichnet, daß der Korrekturschaltung (18, 21) als feste Parameter mindestens ein fahrzeug- bzw. radspezifischer Korrekturwert (K) und radspezifische thermische Zeitkonstanten (T1, T2) zugeführt sind.

5. Schaltungsanordnung nach Anspruch 4, dadurch gekennzeichnet, daß die Korrekturschaltung (18, 21) in der fahrzeugfesten Auswerteschaltung (12) mit enthalten ist.

6. Schaltungsanordnung nach Anspruch 5, dadurch gekennzeichnet, daß die Korrekturschaltung (21) einen programmgesteuerten Rechner enthält, der die zu überwachende Luftmasse (m) im Reifen aus den gemessenen Temperatur- und Luftdruckwerten (t1, p1) des Reifens und den Korrektur-Parametern (p1, F, v, K, T1, T2) zyklisch ermittelt.

7. Schaltungsanordnung nach Anspruch 6, dadurch gekennzeichnet, daß durch Eingabe des Fahrzeug- bzw. Radtyps (Typ 1, 2) aus einer Anzahl von im Datenspeicher 22 der Korrekturschaltung (21) abgelegten festen Korrektur-Parametern (K, T1, T2) die jeweils fahrzeug- bzw. radspezifischen Parameter auszuwählen sind.

8. Schaltungsanordnung nach Ansrpuch 1, dadurch gekennzeichnet, daß die Korrekturschaltung bei fahrendem Fahrzeug einen durch Versuchsfahrten ermittelten Temperaturdifferenzwert (Δt) zu den gemessenen Temperaturwerten (t) addiert.

## Claims

1. Circuit arrangement for monitoring the air mass in a vehicle tyre, having a rotating sensor (13, 14) mounted on the wheel for the air pressure and the temperature in the tyre, having an electromagnetic transformer (11) for the measured values transmitted by the sensor to an evaluation circuit (12) fixed on the vehicle for triggering an alarm signal in the event of too low an air mass in one of the tyres to be monitored, characterised in that the measured value of the temperature and air pressure of the tyre measured by the rotating sensor (13, 14) of each vehicle wheel to be monitored is fed to a correction circuit (18, 21), to which there is applied at least one correction parameter from among air pressure (p) in the tyre, road moisture (F), driving speed (v), rim/tyre pairing correction value (K) and/or a wheel-specific time constant (T) for temperature variations, and whose output transmits a measured value, corrected as a function of at least one correction parameter, for the temperature (tₖ) or for the air mass (m) in the tyre.

2. Circuit arrangement according to Claim 1, characterised in that the correction circuit (18, 21) is fed variable correction parameters (p, F, v) and fixed correction parameters (K, T), the fixed parameters being input in a data memory (23) of the correction circuit (18, 21).

3. Circuit arrangement according to Claim 2, characterised in that the correction circuit (18, 21) is fed, as variable parameters for correcting the temperature (t) measured by the sensor, the tyre pressure (p) and a wet/dry signal (F) and a speed-dependent driving signal (v).

4. Circuit arrangement according to Claim 3, characterised in that the correction circuit (18, 21) is fed as fixed parameters at least one vehicle- or wheel-specific correction value (K) and wheel-specific thermal time constants (T1, T2).

5. Circuit arrangement according to Claim 4, characterised in that the correction circuit (18, 21) is also contained in the evaluation circuit (12) fixed on the vehicle.

6. Circuit arrangement according to Claim 5, characterised in that the correction circuit (21) contains a program-controlled computer which determines the air mass (m) to be monitored in the tyre from the measured temperature and air pressure values (t1, p1) of the tyre and the correction parameters (p1, F, v, K, T1, T2) in a cyclic fashion.

7. Circuit arrangement according to Claim 6, characterised in that the respective vehicle- or wheel-specific parameters are to be selected by inputting the vehicle or wheel type (type 1, 2) from a number of fixed correction parameters (K, T1, T2) filed in the data memory (22) of the correction circuit (21).

8. Circuit arrangement according to Claim 1, characterised in that, when the vehicle is being driven, the correction circuit adds a temperature difference value (Δt) determined by test drives to the measured temperature values (t).

## Revendications

1. Circuit de contrôle de la masse d'air dans un pneumatique de véhicule, comprenant un capteur (13, 14) fixé à la roue et tournant, pour mesurer la pression et la température de l'air dans le pneumatique, un transmetteur électromagnétique (11) pour transmettre les grandeurs de mesure fournies par le capteur à un circuit d'exploitation (12) fixe, du véhicule, pour déclencher un signal d'alarme, lorsque la masse d'air est trop faible dans le pneumatique contrôlé, circuit caractérisé en ce que la valeur de mesure de la température et de la pression de l'air d'un pneumatique, mesurée par le capteur tournant (13, 14) sur chaque roue contrôlée du véhicule, est fourni à un circuit de correction (18, 21) qui reçoit au moins un paramètre de correction relatif à la pression de l'air (p) dans le pneumatique, l'humidité (F) de la chaussée, la vitesse de déplacement (v), le coefficient de correction de couplage jante/pneumatique (K) et/ou une constante de temps (T) spécifique à la roue pour les variations de température et en sortie, ce circuit fournit une valeur de mesure corrigée en fonction d'au moins l'un des paramètres de correction pour la température (tₖ) et la masse d'air (m) dans le pneumatique.

2. Circuit selon la revendication 1, caractérisé en ce que le circuit de correction (18, 21) reçoit des paramètres de correction variables (p, F, v) et des paramères de correction fixes (K, T), les paramètres fixes étant introduits dans une mémoire de données (23) du circuit de correction (18, 21).

3. Circuit selon la revendication 2, caractérisé en ce que le circuit de correction (18, 21) reçoit, comme paramètre variable pour la correction, la température (t) et la pression (p) du pneumatique mesureés par le capteur ainsi qu'un signal humide/sec (F) et un signal de déplacement (v) dépendant de la vitesse.

4. Circuit selon la revendication 3, caractérisé en ce que le circuit de correction (18, 21) reçoit, comme paramètres fixes, au moins une valeur de correction (K) caractéristique du véhicule ou de la roue et des constantes de temps, thermiques, (T1, T2) propres à la roue.

5. Circuit selon la revendication 4, caractérisé en ce que le circuit de correction (18, 21) fait partie du circuit d'exploitation (12) solidaire du véhicule.

6. Circuit selon la revendication 5, caractérisé en ce que le circuit de correction (21) comprend un calculateur commandé par programme qui détermine de manière cyclique la masse d'air (m) à contrôler dans le pneumatique à partir des valeurs mesurées de la température et de la pression de l'air (t1, p1) du pneumatique et des paramètres de correction (p1, F, v, K, T1, T2).

7. Circuit selon la revendication 6, caractérisé en ce qu'en entrant le type de véhicule et le type de roue (type 1, 2), on sélectionne parmi un nombre de paramètres de correction fixes (K, T1, T2) enregistrés dans la mémoire de données (22) du circuit de correction (21), les paramètres respectifs, propres au véhicule ou à la roue.

8. Circuit selon la revendication 1, caractérisé en ce que le circuit de correction ajoute une différence de température (Δt) déterminée par des essais sur trajet pour le véhicule en mouvement, aux valeurs de température (t) mesurées.
